Europäisches Patentamt

European Patent Office

Office européen des brevets

(19)

(11) Veröffentlichungsnummer: **0 067 899**
**B1**

## (12) EUROPÄISCHE PATENTSCHRIFT

(45) Veröffentlichungstag der Patentschrift:
**19.09.84**

(51) Int. Cl.³: **H 04 N 9/46**

(21) Anmeldenummer: **81104872.7**

(22) Anmeldetag: **24.06.81**

(54) **Farbfernsehempfänger mit mindestens einer digitalen integrierten Schaltung zur Verarbeitung des FBAS-Signals.**

(43) Veröffentlichungstag der Anmeldung:
**29.12.82 Patentblatt 82/52**

(45) Bekanntmachung des Hinweises auf die Patenterteilung:
**19.09.84 Patentblatt 84/38**

(84) Benannte Vertragsstaaten:
**DE FR GB IT NL**

(56) Entgegenhaltungen:
**DE - A - 2 163 971**
**DE - A - 2 626 290**

(73) Patentinhaber: **Deutsche ITT Industries GmbH, Hans-Bunte-Strasse 19 Postfach 840, D-7800 Freiburg (DE)**

(84) Benannte Vertragsstaaten: **DE**

(73) Patentinhaber: **ITT INDUSTRIES INC., 320 Park Avenue, New York, NY 10022 (US)**

(84) Benannte Vertragsstaaten: **FR GB IT NL**

(72) Erfinder: **Flamm, Peter, Ing. grad., Stefan-Meier-Strasse 167, D-7800 Freiburg (DE)**

(74) Vertreter. **Stutzer, Gerhard, Dr., Deutsche ITT Industries GmbH Patent- und Lizenzabteilung Hans-Bunte-Strasse 19 Postfach 840, D-7800 Freiburg (DE)**

0 067 899

**Beschreibung**

Die Erfindung betrifft einen Farbfernsehempfänger mit mindestens einer digitalen integrierten Schaltung zur Verarbeitung des Farb-Bild-Austast-Synchronsignal-Gemisches, also des abgekürzt so genannten FBAS-Signals, entsprechend dem Oberbegriff des Patentanspruchs. Ein derartiger Farbfernsehempfänger ist in der deutschen Offenlegungsschrift DE-A1-2 854 236 beschrieben, und das FBAS-Signal wird darin vollständig mit Mitteln der Digitaltechnik aufbereitet. Zu diesem Zweck enthält der vorbeschriebene Farbfernsehempfänger einen Rechtecksignal-Taktgenerator für mindestens drei Taktsignale als Farbhilfsträger-Quarzoszillator, also den sogenannten FHT-Oszillator. Dabei hat das erste Taktsignal die vierfache FHT-Frequenz, während die beiden weiteren Taktsignale die FHT-Frequenz haben, wobei das erste und zweite Taktsignal ein Impulsbreiten-Impulspausen-Verhältnis von 1 : 1 haben. Ferner enthält der vorbeschriebene Farbfernsehempfänger einen mit dem ersten Taktsignal getakteten Analog-Digital-Wandler, an dessen analogem Eingang das FBAS-Signal liegt und der in denjenigen Zeitpunkten aus dessen Amplitude ein Parallel-Binärwort als Ausgangssignal bildet, in denen die jeweiligen Amplituden des nichtdemodulierten Chrominanzsignals den Amplituden des jeweiligen Farbdifferenzsignals gleich sind, und es ist eine Teilschaltung vorhanden, die das digitale Rot-Leuchtdichte-Differenzsignal und das Blau-Leuchtdichte-Differenzsignal, also das in der üblichen verkürzenden Fachsprache so genannte Rot-Farbdifferenzsignal bzw. Blau-Farbdifferenzsignal, erzeugt.

In der Schaltungstechnik von mit analoger Signalaufbereitung arbeitenden Farbfernsehempfängern ist es üblich, den FHT-Oszillator mit der empfangenen Farbträgerschwingung, die im sogenannten Burst enthalten ist, frequenz- und phasenmäßig zu synchronisieren. Hierzu wird zunächst mittels des entsprechend aufbereiteten Key-Pulses die im Burst enthaltene Farbträgerschwingung, also die Burst-Schwingung, aus dem FBAS-Signal separiert und anschließend zur Synchronisierung verwendet, vgl. zu diesen Sachverhalten das Buch von O. Limann, »Fernsehtechnik ohne Ballast«, 12. Auflage, München 1978, Seiten 209 bis 217.

Die im Anspruch gekennzeichnete Erfindung löst die Aufgabe, in einem Farbfernsehempfänger mit mindestens einer digitalen integrierten Schaltung zur Verarbeitung des FBAS-Signals die Synchronisierung des FHT-Oszillators mittels der Burst-Schwingung mit Mitteln der digitalen Signalverarbeitung zu ermöglichen.

Der Vorteil der Erfindung ist unter anderem darin zu sehen, daß durch die rein digitale Signalverarbeitung auf nicht monolithisch integrierbare Schaltungselemente, also insbesondere auf Spulen und Kondensatoren mit nichtintegrierbarer Kapazität, weitgehend verzichtet werden kann und daß die Teilschaltungen vorzugsweise in der Technik integrierter Isolierschicht-Feldeffekttransistor-Schaltungen, also in der sogenannten MOS-Technik, realisiert werden können. Diese Technik ist nämlich zur Realisierung digitaler Schaltungen besser geeignet als die sogenannte Bipolar-Technik. Die Erfindung wird nun anhand der Figuren der Zeichnung näher erläutert.

Fig. 1 zeigt in Form eines Blockschaltbildes und als Ausführungsbeispiel die zur Synchronisierung des FHT-Oszillators erforderlichen Teilschaltungen eines erfindungsgemäßen Farbfernsehempfängers;

Fig. 2 zeigt die Kurvenform der verwendeten drei Taktsignale;

Fig. 3 zeigt die Kurvenform und die zeitliche Zuordnung des Key-Impulses sowie weiterer Impulse;

Fig. 4 zeigt ein Zeigerdiagramm zur Erläuterung der Phasenbeziehungen zwischen den beiden Farbdifferenzsignalen und

Fig. 5 zeigt in analoger Darstellung das Ausgangssignal der bei der erfindungsgemäßen Anordnung vorhandenen Schaltstufe.

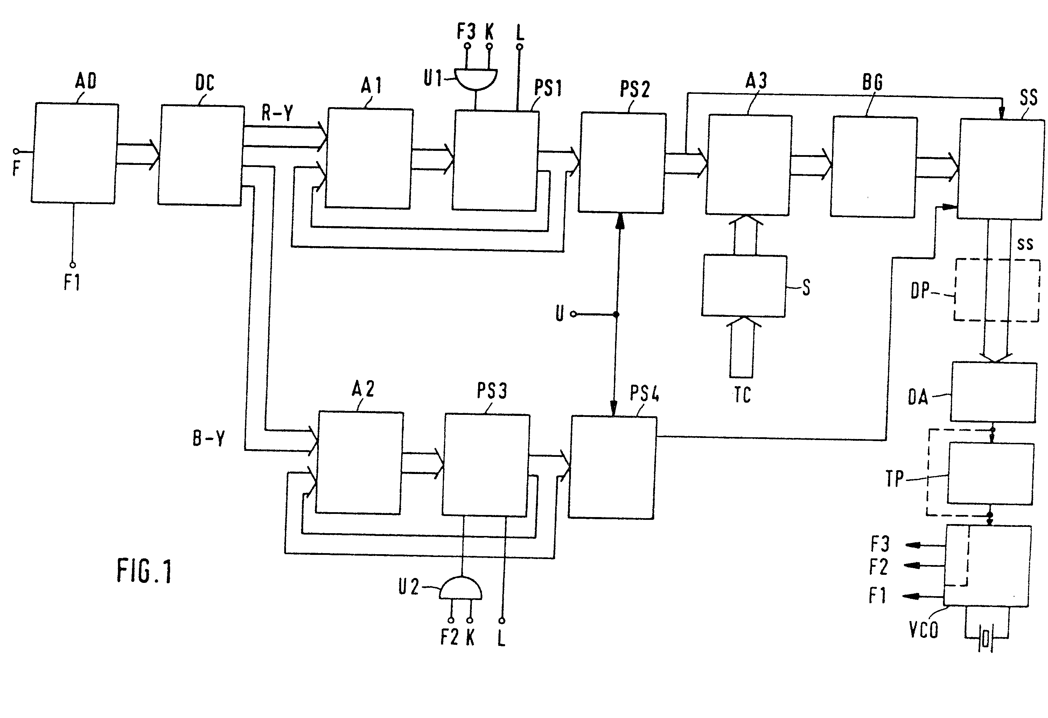

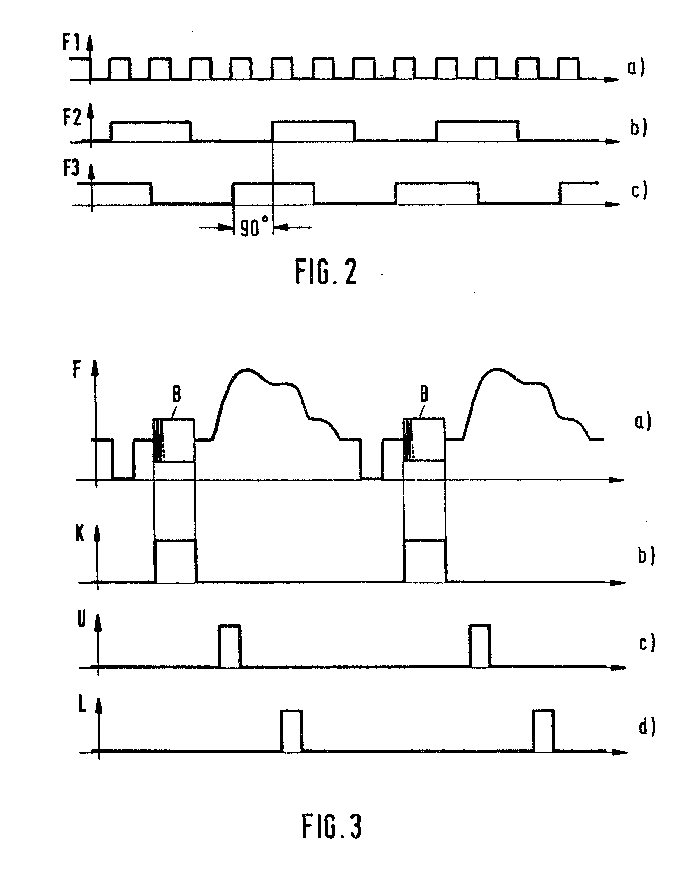

In Fig. 1 ist das Blockschaltbild eines Ausführungsbeispiels gezeigt, das die für die Erfindung wesentlichen Teilschaltungen eines mit digitaler Signalaufbereitung arbeitenden Farbfernsehempfängers enthält. Dem bekannten Stand der Technik nach der eingangs genannten Offenlegungsschrift entsprechen der Analog-Digital-Wandler AD, dessen Analog-Eingang das FBAS-Signal F und das erste Taktsignal F1 zugeführt sind, dessen Frequenz gleich der vierfachen FHT-Frequenz ist und das ein Impulsbreiten-Impulspausen-Verhältnis von 1 : 1 hat, vgl. auch Fig. 2a, sowie die Teilschaltung DC.

Das Parallel-Binärwort am Ausgang des Analog-Digital-Wandlers AD wird von der Teilschaltung DC so weiterverarbeitet, daß an deren beiden Ausgängen das Rot-Farbdifferenzsignal R−Y und das Blau-Farbdifferenzsignal B−Y, wieder in digitaler Form, vorhanden sind. Die Teilschaltung DC entspricht dabei im wesentlichen denjenigen Teilschaltungen der bekannten Anordnung nach der genannten Offenlegungsschrift, die zwischen dem dortigen Analog-Digital-Wandler 2 und den dortigen Teilschaltungen 40 und 60 angeordnet sind. Zwischen dem Analog-Digital-Wandler AD und der Teilschaltung DC oder auch als deren Teil kann eine Anordnung zur digitalen Amplitudenregelung der Burstschwingung entsprechend der älteren europäischen Patentanmeldung EP-A1-0 051 075 (Anmeldetag 30. Oktober 1980, Veröffentlichungstag 12. Mai 1982) angeordnet sein.

Das positive Rot-Farbdifferenzsignal R−Y ist dem ersten Eingang des ersten Paralleladdierers A1 zugeführt, dessen Ausgang den ersten Pufferspeicher PS1 speist. Sein Ausgangssignal ist einerseits dem zweiten Eingang des ersten Paralleladdierers A1 und andererseits dem Eingang des zweiten Pufferspeichers PS2 zugeführt. Der erste Pufferspeicher PS1 hat einen Übernahmeeingang und einen

2

Löscheingang, so daß nur bei einem entsprechenden Signal am Übernahmeeingang eine Information eingeschrieben wird, die bei einem Signal L am Löscheingang dann wieder gelöscht wird. Das Signal am Übernahmeeingang wird mittels des ersten UND-Gatters U1 erzeugt, das das dritte Taktsignal F3 mit dem Key-Puls K UND-verknüpft. Der Kurvenverlauf dieser beiden Signale F3, K ist in Fig. 2c und 3b gezeigt. Das dritte Taktsignal F3 hat die FHT-Frequenz und ein Impulsbreiten-Impulspausen-Verhältnis von 1 : 1, ebenso wie das in Fig. 2b gezeigte zweite Taktsignal F2. Gegenüber diesem eilt das dritte Taktsignal F3 jedoch um 90° vor. Der Key-Puls hat eine Impulsdauer, die der der Burst-Schwingung B entspricht, vgl. Fig. 3, die schematisch und nicht maßstabsgerecht den hier wesentlichen Verlauf des FBAS-Signals F zeigt.

Durch die Ansteuerung des Übernahmeeingangs des ersten Pufferspeichers PS1 genau während der Dauer der Burst-Schwingung B gelangen in den ersten Pufferspeicher PS1 genau die die Burst-Schwingung B repräsentierenden Digitalworte, und zwar pro Fernsehbildzeile einmal, da bekanntlich der Key-Puls K einmal pro Zeile auftritt.

Duch die Signalrückführung vom Ausgang des ersten Pufferspeichers PS1 zum zweiten Eingang des ersten Paralleladdierers A1 wird ferner erreicht, daß die während der Burst-Schwingung auftretenden Digitalwörter aufsummiert werden, so daß die Anordnung aus den beiden Teilschaltungen A1, PS1 auch als Akkumulator angesehen werden kann. Das im ersten Pufferspeicher PS1 aufsummierte Signal wird nun in den zweiten Pufferspeicher PS2 durch Anlegen des Übernahmesignals U an seinen Übernahmeeingang eingeschrieben, das pro Fernsehbildzeile einmal nach Ablauf der Burst-Schwingung B und somit auch zeitlich nach dem Key-Puls K auftritt, vgl. Fig. 3c.

In gleicher Weise wird das positive Blau-Farbdifferenzsignal B–Y mittels des zweiten Paralleladdierers A2 sowie des dritten und vierten Pufferspeichers PS3, PS4 verarbeitet, wobei die Teilschaltungen A2, PS3 durch die entsprechende Signalrückführung wieder als Akkumulator wirken. Dem Übernahmeeingang des dritten Pufferspeichers PS3 ist das zweite UND-Gatter U2 vorgeschaltet, das das zweite Taktsignal F2 nach Fig. 2b und den Key-Puls K nach Fig. 3b UND-verknüpft. Dem Löscheingang ist der Löschpuls L zugeführt, der zeitlich nach dem Übernahmepuls U auftritt. Somit wird in den vierten Pufferspeicher PS4, dessen Übernahmeeingang der Übernahmepuls U zugeführt ist, ebenfalls nach Ende der Burst-Schwingung B das akkumulierte Digitalwort übernommen. Der Pufferspeicher PS4 kann dabei von recht einfachem Aufbau sein, da vom Ausgangssignal des Pufferspeichers PS3 lediglich das Vorzeichen-Bit interessiert und somit weiterverarbeitet werden muß.

Der Ausgang des zweiten Pufferspeichers PS2 liegt am ersten Eingang des dritten Paralleladdierers A3, dessen zweiter Eingang mit dem Ausgang des Speichers S verbunden ist, in den vom Gerätehersteller bei PAL-Farbfernsehempfängern ein konstanter Wert und bei NTSC-Farbfernsehempfängern über seinen Eingang ein digitales Farbtonregel-Signal TC eingeschrieben wird.

Der Ausgang des dritten Paralleladdierers A3 liegt am Eingang des digitalen Begrenzers BG, dessen Ausgang die Schaltstufe SS steuert. Diese hat drei Schaltstellungen und zwei Schalteingänge, deren erster mit dem Vorzeichen-Bit des Ausgangssignals des zweiten Pufferspeichers PS2 gespeist ist und deren zweiter am Ausgang des vierten Pufferspeichers PS4 liegt. Das Ausgangssignal der Schaltstufe SS ist das digitale Stellsignal ss für den FHT-Oszillator VCO, das diesem nach Tiefpaß-Filterung und Digital-Analog-Wandlung zugeführt ist. Zur Realisierung dieser beiden Funktionen sind in Fig. 1 zwei Möglichkeiten gezeigt, nämlich die mit durchgezogenen Linien gezeichnete Variante der Zuführung des Signals ss zum Digital-Analog-Wandler DA mit nachfolgender analoger Filterung im analogen Tiefpaßfilter TP oder die mit gestrichelten Linien gezeichnete zweite Variante der Zuführung des Signals ss zum digitalen Tiefpaßfilter DP mit nachfolgendem Digital-Analog-Wandler DA und direkter Ansteuerung des FHT-Oszillators VCO mit dessen Ausgangssignal.

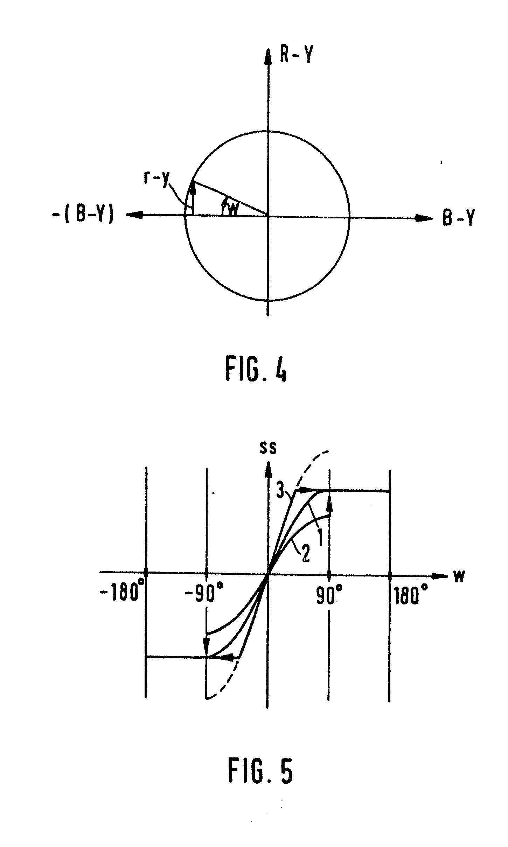

Zur Erläuterung des Sinns und Zwecks sowie zur Funktionserläuterung des digitalen Begrenzers BG und der Schaltstufe SS dienen die Fig. 4 und 5. Die Fig. 4 zeigt das durch die normgemäße Zuordnung der beiden Farbdifferenzsignale gegebene Zeigerdiagramm, wobei bereits berücksichtigt ist, daß zwar der Bezugsphasenwinkel 0 den Signalen B–Y = 0 und R–Y = 0 entspricht, die Soll-Bedingung für die richtige Phase der FHT-Schwingung jedoch gleich der Burst-Phase von 180°, bezogen auf die Bezugsphase und über zwei Zeilen gemittelt, ist. Die Sollbedingung entspricht also den Signalen –(B–Y) = 0 und R–Y = 0. Eine Phasenabweichung um den Winkel w von dieser Sollbedingung ist in Fig. 4 daher von der Bezugsrichtung –(B–Y) aus eingezeichnet.

Ein wesentlicher Aspekt der Erfindung ist nun, daß für einen von –(B–Y) aus gerechneten Phasenwinkel w von ±90° als Stellsignal ss des FHT-Oszillators VCO der diesem Winkel w zugeordnete Digitalwert r–y dient. In der analogen Darstellung nach Fig. 5 hat somit zwischen den Werten –90° und +90° die Kurve r–y sinusförmigen Verlauf, da sie (R–Y)sin w entspricht. Dies sind in Fig. 5 die Kurven 1, 2, 3. Die Kurve 1 ist dabei als Kurve mit der Sollamplitude von R–Y gezeigt, während die beiden anderen Kurven 2, 3 für mögliche kleinere bzw. größere Amplituden gelten. Im letzteren Fall tritt die Begrenzungswirkung des digitalen Begrenzers BG innerhalb des Winkelbereiches ±90° ein, wie dies durch die mit einem Pfeil versehenen und waagerecht verlaufenden Kurventeile der Kurve 3 zeigen. Das Ausgangssignal des digitalen Begrenzers BG hat also die innerhalb dieses Winkelbereiches auftretenden digitalen Werte.

Dieses Ausgangssignal ist dem Eingang der Schaltstufe SS zugeführt, die, wie bereits erwähnt, drei Schaltstellungen aufweist. In der einen Schaltstellung wird das Ausgangssignal des digitalen Begren-

3

zers BG zum Ausgang ohne Veränderung durchgeschaltet. In den beiden anderen Schaltstellungen wird dagegen am Ausgang der Schaltstufe SS ein Signal erzeugt, das dem oberen bzw. unteren Begrenzungswert gleich ist. Welche dieser drei Schaltstellungen die Schaltstufe SS einnimmt, wird von den beiden einstelligen Binärsignalen an ihren beiden Schalteingängen bestimmt, deren erster, wie bereits erwähnt, mit der das Vorzeichen-Bit führenden Ausgangsleitung des zweiten Pufferspeichers PS2 und deren zweite mit dem Ausgang des vierten Pufferspeichers PS4 verbunden ist.

Die Zuordnung der beiden Schaltsignale an den beiden Schalteingängen zum Signal B—Y ist so vorgenommen, daß in den beiden rechten Quadranten der Fig. 4, also wenn B—Y positiv ist, die Schaltstufe SS auf die beiden Begrenzungswerte umschaltet, wobei bei positivem R—Y der obere Begrenzungswert und bei negativem R—Y der untere Begrenzungswert an den Ausgang als Ausgangssignal ss durchgeschaltet wird.

Entspricht das momentane Signal r—y in Fig. 5 beispielsweise der Kurve 2 und ist positiv, so »springt« die Kurve 2 bei Erreichen von 90° durch den Winkel w auf den oberen Begrenzungswert zwischen 90° und 180°, was dort durch den senkrechten Pfeil angedeutet ist. In gleicher Weise springt bei negativem r—y die Kurve 2 bei —90° auf den unteren Begrenzungswert zwischen —90° und —180°.

Zur Veranschaulichung dieser Wirkungsweise sind in der folgenden Tabelle einige beispielhafte Digitalwerte und -wörter angegeben, wobei im Signal ss das ganz links stehende Bit das Vorzeichen-Bit ist und in diesem Beispiel »1« als Vorzeichen-Bit »negativ« und entsprechend »0« »positiv« bedeutet sowie ferner »1« in der Spalte »R—Y zu groß« eben dieses bedeutet. Ferner ist zu berücksichtigen, daß das Ausgangssignal ss im Zweierkomplement-Code angegeben ist; die größte Zahl (ohne Vorzeichen) ist 1111111 und die kleinste Zahl (ohne Vorzeichen) 0000000.

| Zeile | Vorzeichen von R—Y | | Vorzeichen von B—Y | | r—y zu groß | Ausgangssignal ss |
|---|---|---|---|---|---|---|
| 1 | 0 | | 0 | | 0 | 01111111 |
| 2 | 0 | | 0 | (+) | 1 | 01111111 |
| 3 | 0 | (+) | 1 | | 0 | Ausgangssignal von BG |
| 4 | 0 | | 1 | (—) | 1 | 01111111 |
| 5 | 1 | | 0 | | 0 | 10000000 |
| 6 | 1 | | 0 | (+) | 1 | 10000000 |
| 7 | 1 | (—) | 1 | | 0 | Ausgangssignal von BG |
| 8 | 1 | | 1 | (—) | 1 | 10000000 |

Wie ohne weiteres ersichtlich ist, entsprechen die Zeilen 1 und 2 einem Wert im ersten Quadranten der Fig. 4, und somit nimmt das Ausgangssignal ss den oberen Begrenzungswert an. Dieser tritt auch im Fall der Zeile 4 auf, da dort zwar B—Y negativ ist, jedoch r—y zu groß ist. Der untere Begrenzungswert tritt in vergleichbarer Weise in den Fällen der Zeilen 5, 6 und 8 auf, während das Ausgangssignal des digitalen Begrenzers BG in den Fällen der Zeile 3 und 7 als Ausgangssignal ss erscheint. Nur in diesen beiden Fällen ist B—Y nämlich negativ und r—y nicht zu groß.

Durch das Eingangssignal TC des Speichers S kann ein Bezugswert für den Abgleich des FHT-Oszillators fest vorgegeben werden, wie z. B. bei PAL-Farbfernsehempfängern. Bei solchen nach dem NTSC-System ist dieses Signal das dort auftretende Farbtonregel-Signal, daß im vorliegenden Fall von einer anderen Teilschaltung des Farbfernsehempfängers in digitaler Form erzeugt wird.

Durch den gestrichelt eingezeichneten Teil des FHT-Oszillators VCO ist angedeutet, daß dieser das erste Taktsignal F1 mittels einer Quarzoszillatorschaltung erzeugt und daraus durch entsprechende Frequenzteiler die zweiten und dritten Taktsignale F2, F3 bereitstellt.

In Fig. 1 ist durch die bandförmigen Verbindungsleitungen angedeutet, daß es sich hierbei um Mehrfach-Parallel-Leitungen zur parallelen Übertragung von Digitalwörtern handelt, also beispielsweise um einen achtfachen Bus, während es sich bei den linienförmigen Verbindungsleitungen um eine übliche Leitung handelt, über die nur ein einstelliges Binärsignal übertragen wird.

## Patentanspruch

1. Farbfernsehempfänger mit mindestens einer digitalen integrierten Schaltung zur Verarbeitung des Farb-Bild-Austast-Synchronsignal-Gemisches (FBAS-Signals)

— mit einem Rechtecksignal-Taktgenerator für mindestens drei Taktsignale (F1, F2, F3) als Farbhilfsträger-Quarzoszillator (FHT-Oszillator), deren erstes (F1) die vierfache FHT-Frequenz, deren zweites und drittes (F2, F3) die FHT-Frequenz und deren erstes und zweites ein Impulsbreiten-Impulspausen-Verhältnis von 1 : 1 haben,
— mit einem vom ersten Taktsignal (F1) getakteten Analog-Digital-Wandler (AD), an dessen Analog-eingang das FBAS-Signal (F) liegt und der in denjenigen Zeitpunkten aus dessen Amplitude ein Parallel-Binärwort als Ausgangssignal bildet, in denen die jeweiligen Amplituden des nichtdemodulierten Chrominanzsignals den Amplituden des jeweiligen Farbdifferenzsignals gleich sind,
— mit einer Teilschaltung (DC), die das digitale Rot-Leuchtdichte-Differenzsignal (R—Y) und das digitale Blau-Leuchtdichte-Differenzsignal (B—Y) erzeugt,
— und mit Binär-Rechenstufen und Pufferspeichern zur digitalen Signalverarbeitung,

gekennzeichnet durch folgende der digitalen FHT-Oszillator-Synchronisierung mit der im FBAS-Signal (F) enthaltenen Burst-Schwingung (B) dienende Teilschaltungen und Merkmale:

— der FHT-Oszillator (VCO) ist in an sich bekannter Weise eine phasenverriegelte Schleife, allerdings mit digitaler Stellsignalerzeugung,
— das positiv digitale Rot-Leuchtdichte-Differenzsignal (R—Y) ist dem ersten Eingang eines ersten Paralleladdierers (A1) zugeführt, dessen Ausgang einen ersten Pufferspeicher (PS1) speist, dessen Ausgang mit dem zweiten Eingang des ersten Paralleladdierers (A1) und mit dem Eingang eines zweiten Pufferspeichers (PS2) verbunden ist,
— das positive digitale Blau-Leuchtdichte-Differenzsignal (B—Y) ist dem ersten Eingang eines zweiten Paralleladdierers (A2) zugeführt, dessen Ausgang einen dritten Pufferspeicher (PS3) speist, dessen Ausgang mit dem zweiten Eingang des zweiten Paralleladdierers (A2) und dessen Vorzeichenausgang mit dem Eingang eines vierten Pufferspeichers (PS4) verbunden ist,
— der Ausgang des zweiten Pufferspeichers (PS2) liegt am ersten Eingang eines dritten Paralleladdierers (A3), dessen zweiter Eingang mit dem Ausgang eines Speichers (S) verbunden ist und dessen Ausgang am Eingang eines digitalen Begrenzers (BG) liegt, dessen Ausgang mit dem Eingang einer Schaltstufe (SS) mit drei Schaltstellungen und zwei Schalteingängen verbunden ist,
— der Vorzeichenausgang des zweiten Pufferspeichers (PS2) liegt am ersten Schalteingang und der Ausgang des vierten Pufferspeichers (PS4) am zweiten Schalteingang der Schaltstufe (SS),
— der Ausgang der Schaltstufe (SS) ist entweder direkt mit dem Eingang eines Digital-Analog-Wandlers (DA) verbunden, dessen Ausgang über einen analogen Tiefpaß (TP) mit dem Spannungssteuerungseingang des FHT-Oszillators verbunden ist, oder über einen digitalen Tiefpaß (DP) mit dem Eingang des Digital-Analog-Wandlers (DA) verbunden, dessen Ausgang dann direkt mit dem Spannungssteuerungseingang des FHT-Oszillators (VCO) verbunden ist,
— der Übernahmeeingang des ersten Pufferspeichers (PS1) ist mit dem Ausgang eines ersten UND-Gatters (U1) verbunden, dessen erstem Eingang der Key-Puls (K) und dessen zweitem Eingang das dritte Taktsignal (F3) zugeführt ist,
— der Übernahmeeingang des dritten Pufferspeichers (PS3) ist mit dem Ausgang eines zweiten UND-Gatters (U2) verbunden, dessen erstem Eingang der Key-Puls (K) und dessen zweitem Eingang das zweite Taktsignal (F2) zugeführt ist,
— das dritte Taktsignal (F3) eilt dem zweiten Taktsignal (F2) um 90° vor und hat ein Impulsbreiten-Impulspausen-Verhältnis von 1 : 1,
— dem Übernahmeeingang des zweiten (PS2) und des vierten Pufferspeichers (PS4) ist während jeder Zeile ein nach dem Key-Puls (K) auftretender Übernahmeimpuls (U) zugeführt, und
— dem Löscheingang des ersten (PS1) und dritten Pufferspeichers (PS3) ist während jeder Zeile ein nach dem Übernahmeimpuls (U) auftretender Löschimpuls (L) zugeführt.

## Claim

Colour-television receiver with at least one digital integrated circuit for processing the composite colour signal, comprising

— a square-wave clock generator used as a chrominance-subcarrier oscillator and generating at least three clock signals (F1, F2, F3) the first of which (F1) is at four times the chrominance-subcarrier frequency, and the second and third of which (F2, F3) is at the chrominance-subcarrier frequency, the first and the second clock signal having a mark-space ratio of 1 : 1,

— an analog-to-digital converter (AD) which is clocked by the first clock signal (F1), is fed with the composite colour signal (F) through its analog input, and forms a parallel binary word from the amplitude of composite colour-signal (F) at the instance respective amplitudes of the undemodulated chrominance signal are equal to the amplitudes of the respective colour-difference signal,

— a subcircuit (DC) producing the digital Red-minus-Luminance difference signal (R−Y) and the digital Blue-minus-Luminance difference signal (B−Y), and

— binary computing stages and buffer memories for digital signal processing,

characterized by the following subcircuits and features serving to digitally synchronize the chrominance-subcarrier oscillator with the burst (B) contained in the composite colour signal (F):

— The chrominance-subcarrier oscillator (VCO) is a phase locked loop whose control signal is generated digitally, however;

— the positive digital Red-minus-Luminance difference signal (R−−Y) is applied to the first input of a first parallel adder (A1) whose output feeds a first buffer memory (PS1) having its output coupled to the second input of the first parallel adder (A1) and to the input of a second buffer memory (PS2);

— the positive digital Blue-minus-Luminance difference signal (B−Y) is applied to the first input of a second parallel adder (A2) whose output feeds a third buffer memory (PS3) whose output is coupled to the second input of the second parallel adder (A2) and whose sign output is coupled to the input of a fourth buffer memory (PS4);

— the output of the second buffer memory (PS2) is coupled to the first input of a third parallel adder (A3) whose second input is connected to the output of a memory (S) and whose output is coupled to the input of a digital limiter (BG) having its output connected to the input of a switching stage (SS) with three switch positions and two switch inputs;

— the sign output of the second buffer memory (PS2) is coupled to the first switch input of the switching stage (SS), and the output of the fourth buffer memory (PS4) is coupled to the second switch input of the switching stage (SS);

— the output of the switching stage (SS) is connected to the input of a digital-to-analog converter (DA) either directly, in which case the output of the digital-to-analog converter (DA) is coupled to the voltage-control input of the chrominance-subcarrier oscillator (VCO) through an analog low-pass filter (TP), or through a digital low-pass filter (DP), in which case the output of the digital-to-analog converter (DA) is connected directly to the voltage-control input of the chrominance-subcarrier oscillator (VCO);

— the enable input of the first buffer memory (PS1) is connected to the output of a first AND gate (U1) whose first and second inputs are fed with the keying signal (K) and the third clock signal (F3), respectively;

— the enable input of the third buffer memory (PS3) is connected to the output of a second AND gate (U2) whose first and second inputs are fed with the keying signal (K) and the second clock signal (F2), respectively;

— the third clock signal (F3) leads the second clock signal (F2) by 90° and has a 1 : 1 mark/space ratio;

— the enable inputs of the second buffer memory (PS2) and the fourth buffer memory (PS4) are fed during each line with an enabling pulse (U) following the keying pulse (K), and

— the clear inputs of the first buffer memory (PS1) and the third buffer memory (PS3) are fed during each line with a clearing pulse (L) following the enabling pulse (U).

**Revendication**

1. Récepteur de télévision en couleurs, comportant au moins un circuit intégré pour traiter le signal composite »chrominance-luminance-suppression-synchronisation« (signal FBAS), comprenant:

— un générateur de signaux d'horloge rectangulaires, fournissant au moins trois signaux d'horloge (F1, F2, F3), ce générateur opérant en tant qu'oscillateur à quartz à fréquence de sous-porteuse de chrominance (oscillateur FHT), le premier signal d'horloge (F1) ayant une fréquence quadruple de celle de la sous-porteuse de chrominance (FHT), le deuxième et le troisième signaux d'h orloge (F2, F3) ayant la fréquence de la FHT, le premier et le deuxième de ces signaux ayant un rapport largeur-intervalle d'impulsion égal à 1 : 1;

— un convertisseur analogique-numérique (AD) doté d'une entrée d'horloge recevant le premier signal d'horloge (F1), et dont l'entrée analogique reçoit le signal composite FBAS (F), ce circuit convertisseur (AD) formant, à partir de l'amplitude de ce signal (F), un signal de sortie sous la forme d'un mot binaire parallèle, aux instants où les amplitudes du signal de chrominance non démodulé sont égales aux amplitudes du signal de différence de couleur;

— un circuit élémentaire (DC) engendrant le signal numérique de différence »rouge moins lumi-

6

nance» (R—Y) et le signal numérique de différence »bleu moins luminance« (B—Y) ; et
— des étages de calcul et des mémoires tampons binaires, pour le traitement numérique des signaux ;

caractérisé par les particularités et circuits élémentaires ci-après qui servent à la synchronisation numérique de l'oscillateur FHT par l'oscillation de salve (B) contenue dans le signal composite FBAS (F):

— l'oscillateur FHT (VCO) est inclus dans une boucle à verrouillage de phase d'une façon connue en soi, dont le signal de réglage est cependant engendré numériquement ;
— le signal positif de différence numérique »rouge moins luminance« (R—Y) est amené à la première entrée d'un premier additionneur parallèle (A1) dont la sortie alimente une première mémoire tampon (PS1) dont la sortie est reliée à la deuxième entrée du premier additionneur parallèle (A1) et à l'entrée d'une deuxième mémoire tampon (PS2) ;
— le signal positif de différence numérique »bleu moins luminance« (B—Y) est amené à la première entrée du deuxième additionneur parallèle (A2) dont la sortie alimente une troisième mémoire tampon (PS3) dont la sortie est reliée à la deuxième entrée du deuxième additionneur parallèle (A2) et dont la sortie de signe est reliée à l'entrée d'une quatrième mémoire tampon (PS4) ;
— la sortie de la deuxième mémoire tampon (PS2) est appliquée à la première entrée d'un troisième additionneur parallèle (A3) dont la deuxième entrée est reliée à la sortie d'une mémoire (S), et dont la sortie est appliquée à l'entrée d'un limiteur numérique (BG) dont la sortie est reliée à l'entrée d'un étage de commutation (SS) ayant trois positions de commutation et deux entrées de commutation ;
— la sortie de signe de la deuxième mémoire tampon (PS2) est appliquée à la première entrée de commutation et la sortie de la quatrième mémoire tampon (PS4) à la deuxième entrée de commutation de l'étage de commutation (SS) ;
— la sortie de l'étage de commutation (SS) est reliée soit directement à l'entrée d'un convertisseur numérique-analogique (DA), dont la sortie est reliée, via un filtre passe-bas analogique (TP), à l'entrée de commande par tension de l'oscillateur FHT, soit, via un filtre passe-bas numérique (DP), à l'entrée du convertisseur numérique-analogique (DA) dont la sortie est alors directement reliée à l'entrée de commande par tension de l'oscillateur FHT (VCO) ;
— l'entrée de prise en charge de la première mémoire tampon (PS1) est reliée à la sortie d'une première porte ET (U1) à la première entrée de laquelle est amenée l'impulsion de porte (K) et à la deuxième entrée de laquelle est amené le troisième signal d'horloge (F3) ;
— l'entrée de prise en charge de la troisième mémoire tampon (PS3) est reliée à la sortie d'une deuxième porte ET (U2) à la première entrée de laquelle est amenée l'impulsion de porte (K) et à la deuxième entrée de laquelle est amené le deuxième signal d'horloge (F2) ;
— le troisième signal d'horloge (F3) est en avance de 90° sur le deuxième signal d'horloge (F2) et possède un rapport largeur-intervalle d'impulsion de 1 : 1 ;
— une impulsion de prise en charge (U) apparaissant après l'impulsion de porte (K) est amenée, pendant chaque ligne, à l'entrée de prise en charge de la deuxième (PS2) et de la quatrième mémoire tampon (PS4) ; et
— une impulsion d'effacement (L) apparaissant après l'impulsion de prise en charge (U) est amenée, pendant chaque ligne, à l'entrée d'effacement de la première (PS1) et de la troisième mémoires tampons (PS3).

FIG.1

**FIG. 2**

**FIG. 3**

FIG. 4

FIG. 5